# FASCICULE DE BREVET EUROPEEN

(11) **EP 1 584 441 B1**
(45) Date de publication et mention de la délivrance du brevet: **10.02.2010**
(21) Numéro de dépôt: 05290638.5
(22) Date de dépôt: 23.03.2005
(51) Int. Cl.: B29C 44/56, B29C 67/20, B29C 69/00, B60S 3/06

(54) **Procédé de fabrication de poils de brosses de lavage de véhicules, poils ainsi obtenus et brosses réalisées à partir de tels poils**
Verfahren zum Herstellen von Bürstenfilamenten für Autowaschanlagen, Filamenten und Bürsten aus diesen Filamenten hergestellt
Process for manufacturing bristles for brushes of car washing installations, bristles and brushes made using said bristles

(30) Priorité: 09.04.2004 FR 0403751
(43) Date de publication de la demande: 12.10.2005
(73) Titulaire: Manufacture des Brosses du Marais Poitevin MBMP, 79220 Champdeniers (FR)
(72) Inventeur: Vassilopoulos, Jean-Nicolas, 60270 Gouvieux (FR)
(74) Mandataire: Chameroy, Claude

(56) Documents cités:
- EP-A- 0 876 778
- EP-A- 1 213 984
- FR-A- 1 581 220
- FR-A- 2 039 266
- US-A- 5 700 407
- US-A- 5 946 761
- US-B1- 6 289 544

## Description

La présente invention concerne un procédé de fabrication de poils de brosses de lavage de véhicules à moteur conformément à la revendication 1, notamment des véhicules automobiles, y compris les bus et les camions, mais aussi des métros ou des trains. L'invention a trait également aux poils obtenus par ce procédé et aux brosses réalisées à partir de tels poils conformément aux revendications 6 et 8.

Les installations de lavage automatique de véhicules sont actuellement équipées en majorité de brosses réalisées à partir de fils en polyéthylène extrudé de section cruciforme, dont le diamètre varie entre 0,6 et 1,2 mm. De telles brosses sont relativement lourdes à l'état mouillé, car une fine pellicule d'eau se dépose sur la totalité de la surface des poils. Par suite, sous l'effet de l'énergie cinétique des poils, une très légère couche de matière se dépose sur les véhicules lors du lavage, ternissant particulièrement les couleurs foncées.

On connaît également par exemple par le document EP-B-1 213 984 des brosses de lavage du type "mousse", dans lesquelles les poils sont constitués par une mousse de matière plastique extrudée à cellules fermées. De telles brosses sont considérées comme plus douces pour les carrosseries, notamment parce qu'elles sont plus légères. Cependant, lorsque la peau de surface obtenue lors de l'extrusion est usée ou endommagée, les cellules fermées périphériques se trouvent ouvertes et se remplissent alors d'eau. Or, le procédé d'extrusion ne permet d'obtenir que des cellules relativement grandes. Il s'ensuit que les poils sont considérablement alourdis et présentent alors les mêmes inconvénients que les fils de polyéthylène extrudé classiques.

La présente invention a donc pour but principal de remédier à ces inconvénients et, pour ce faire, elle a pour objet un procédé de fabrication de poils de brosses en mousse de matière plastique pour le lavage de véhicules qui se caractérise essentiellement en ce qu'il consiste à réaliser de la mousse de polyoléfine à cellules fermées dans un moule sous pression, sous la forme d'un bloc qui est ensuite découpé en plaques, puis en lanières, de manière à former des poils de brosses.

Le procédé de moulage sous pression permet d'obtenir des cellules fermées beaucoup plus petites qu'avec le procédé d'extrusion. Il s'ensuit que même à l'état mouillé, les poils de brosses ainsi obtenus restent relativement légers et n'abîment donc pas les carrosseries de véhicules. De plus, comme les cellules sont plus petites, elles ne retiennent pas les particules de saleté et il n'est donc pas nécessaire de prévoir un prélavage avec de l'eau à haute pression.

Dans une forme de réalisation particulière de l'invention, la pression de moulage est supérieure à 5000 kpa, ce qui permet d'obtenir des cellules encore plus fines.

De préférence, la mousse de polyoléfine est réticulée chimiquement, ce qui permet d'améliorer notamment la résistance mécanique et la résistance chimique du produit.

De préférence également, la mousse de polyoléfine a une densité comprise entre 150 et 200 kg/m3, ce qui représente un bon compromis entre la légèreté du produit et sa résistance.

De préférence encore, la mousse de polyoléfine a une densité de 170 kg/m3.

Selon une autre caractéristique de la présente invention, les poils de brosses ainsi obtenus ont une section allant de 0,2 cm à 1,5 cm.

De préférence, les poils ont une section rectangulaire de 0,3 cm sur 0,6 cm, afin d'avoir une efficacité maximum.

Selon encore une autre caractéristique de l'invention, les brosses de lavage de véhicules réalisées à partir des poils ainsi obtenus sont constituées par des plaques à alvéoles standard dans lesquelles les poils sont fixés de manière traditionnelle.

En variante, chaque plaque à alvéoles comporte à la fois des poils en mousse conformes à l'invention et des poils de matière plastique extrudée classiques.

Selon une autre variante, la brosse comprend des poils de deux longueurs différentes.

Selon encore une autre variante, les poils longs sont constitués par des poils en mousse conformes à l'invention, tandis que les poils courts sont constitués par des poils de matière plastique extrudée classiques.

Une forme d'exécution de l'invention est décrite ci-après à titre d'exemple, en référence au dessin annexé dans lequel :
- la figure 1 est une vue de profil d'une portion de plaque support à alvéoles dans laquelle sont montés des poils en mousse de polyoléfine conformes à l'invention et qui est destiné à la confection de brosses de lavage de véhicules, et
- la figure 2 est une vue du verso de cette portion de plaque support.

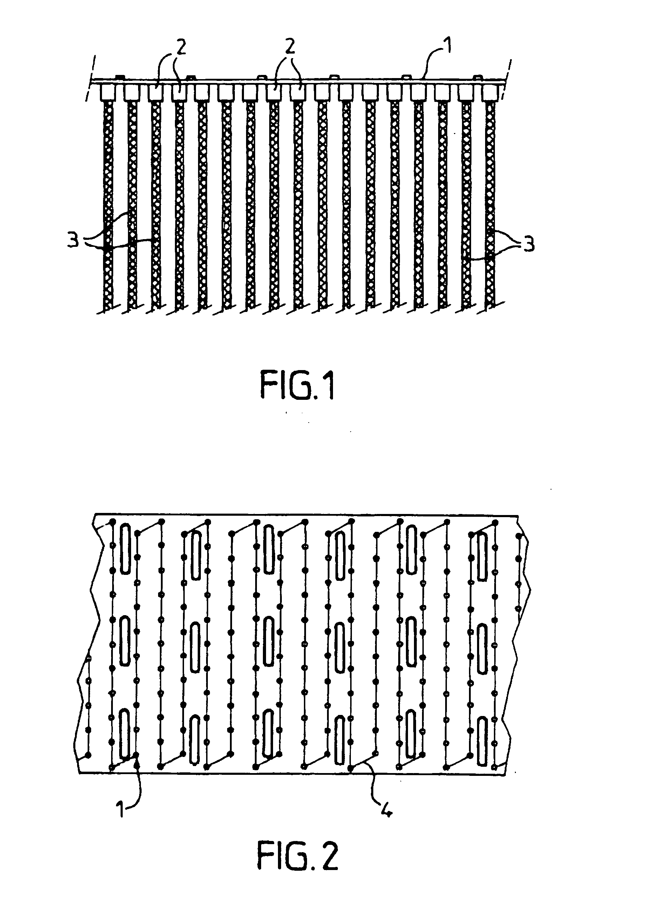

En se référant aux figures 1 et 2, on peut voir une portion de plaque support 1 pourvue d'une multitude d'alvéoles 2. Cette plaque support 1, réalisée en une matière plastique souple, est destinée à être montée sur un arbre de brosse faisant partie d'une installation de lavage automatique de véhicules, non représentée.

Dans chaque alvéole 2 est fixée une touffe de poils 3 qui est maintenue en place de façon traditionnelle au moyen d'un fil de Nylon 4.

Conformément à l'invention, les poils de brosse 3 sont obtenus selon un procédé consistant à réaliser de la mousse de polyoléfine à cellules fermées dans un moule sous pression, sous la forme d'un bloc qui est ensuite découpé en plaques, puis en lanières, brins ou fils, de manière à former ainsi des poils de brosse susceptibles d'être montés dans les alvéoles 2 des plaques 1.

La pression de moulage est normalement supérieure à 5000 kpa et la mousse' de polyoléfine est réticulée chimiquement à l'intérieur du moule, la réticulation et le moussage s'effectuant simultanément au cours d'une phase de chauffage.

La densité du produit sera avantageusement comprise entre 150 et 200 kg/m3 et sera de préférence égale à 170 kg/m3.

A titre d'information, on pourra par exemple choisir le matériau de marque ALVEOLUX commercialisé par la société japonaise SEKISUI.

Les brins de mousse constituant les poils de la brosse peuvent avoir une section allant de 0,2 cm à 1,5 cm. Des essais ont montré qu'une section rectangulaire de 0,3 cm sur 0,6 cm donnait d'excellents résultats.

Les brosses de lavage ainsi réalisées présentent de nombreux avantages par rapport aux brosses utilisées jusqu'à présent.

La matière employée a tout d'abord d'excellentes propriétés physiques, notamment une souplesse et une résistance qui la rendent particulièrement bien adaptée au travail de brossage des véhicules dans un milieu aqueux chargé de produits divers. L'inertie à la plupart des produits chimiques est très importante et permet l'utilisation de tous les produits couramment employés dans les systèmes de lavage : savons, détergents, lustrants, produits séchants, etc...

Par ailleurs, le faible taux d'absorption d'eau de la mousse de polyoléfine réticulé chimiquement, dû notamment au fait que ses cellules fermées sont particulièrement fines, permet à l'ensemble de la brosse de ne pas s'alourdir lors des lavages successifs. De plus, la taille de ces cellules est telle qu'elles ne permettent pas de retenir les particules abrasives enlevées lors des lavages et qui pourraient endommager les carrosseries des véhicules. Il n'est donc pas nécessaire de prévoir un prélavage à haute pression, ce qui représente une économie non négligeable et un gain de temps important.

Dans une variante de réalisation de l'invention, on peut prévoir que la plaque support 1 comporte à la fois des poils 3 conformes à l'invention et des poils classiques en matière plastique extrudée.

On peut également prévoir que la brosse de lavage comportera des poils de deux longueurs différentes, comme décrit dans le brevet français No. 2 762 764 du 5 Mai 1997. Dans ce cas, les poils longs seront constitués en mousse conforme à l'invention, tandis que les poils courts seront constitués par des poils classiques en matière plastique extrudée.

## Revendications

1. Procédé de fabrication de poils de brosse en mousse de matière plastique pour le lavage de véhicules, **caractérisé en ce qu'**il consiste à réaliser de la mousse de polyoléfine à cellules fermées dans un moule sous pression, sous la forme d'un bloc qui est ensuite découpé en plaques, puis en lanières, de manière à former des poils de brosse.

2. Procédé selon la revendication 1, **caractérisé en ce que** la pression de moulage est supérieure à 5000 kpa

3. Procédé selon la revendication 1 ou 2, **caractérisé en ce que** la mousse de polyoléfine est réticulée chimiquement.

4. Procédé selon l'une quelconque des revendications 1 à 3, **caractérisé en ce que** la mousse de polyoléfine a une densité comprise entre 150 et 200 kg/m3.

5. Procédé selon la revendication 4, **caractérisé en ce que** la mousse de polyoléfine a une densité de 170 kg/m3.

6. Poils de brosses obtenus par le procédé selon l'une quelconque des revendications 1 à 5, **caractérisé en ce qu'**ils ont une section allant de 0,2 cm à 1,5 cm.

7. Poils selon la revendication 6, **caractérisé en ce qu'**ils ont une section rectangulaire de 0,3 cm sur 0,6 cm.

8. Brosse de lavage de véhicules, réalisée à partir de poils de brosse obtenus par le procédé selon l'une quelconque des revendications 1 à 5, **caractérisée en ce qu'**elle est constituée par des plaques (1) à alvéoles (2) standard dans lesquelles les poils (3) sont fixés de manière traditionnelle.

9. Brosse selon la revendication 8, **caractérisée en ce que** chaque plaque à alvéoles (1) comporte à la fois des poils en mousse (3) obtenus par le procédé selon l'une quelconque des revendications 1 à 5 et des poils de matière plastique extrudée classiques.

10. Brosse selon la revendication 8 ou 9, **caractérisée en ce que** la brosse comprend des poils (3) de deux longueurs différentes.

11. Brosse selon les revendications 9 et 10, **caractérisée en ce que** les poils longs sont constitués par des poils en mousse (3) obtenus par le procédé selon l'une quelconque des revendications 1 à 5, tandis que les poils courts sont constitués par des poils de matière plastique extrudée classiques.

## Claims

1. Method of manufacturing brush bristles made of plastic foam for washing vehicles, **characterised in that** it consists in producing closed-cell polyolefin foam in a pressurised mould in the form of a block which is then cut into sheets, then into strips, so as to form brush bristles.

2. Method according to claim 1, **characterised in that** the moulding pressure is higher than 5000 kPa.

3. Method according to claim 1 or claim 2, **characterised in that** the polyolefin foam is chemically cross-linked.

4. Method according to any one of claims 1 to 3, **characterised in that** the polyolefin foam has a density of between 150 and 200 kg/m³.

5. Method according to claim 4, **characterised in that** the polyolefin foam has a density of 170 kg/m³.

6. Brush bristles obtained by the method according to any one of claims 1 to 5, **characterised in that** they have a cross section ranging from 0.2 cm to 1.5 cm.

7. Bristles according to claim 6, **characterised in that** they have a rectangular cross section of 0.3 cm by 0.6 cm.

8. Vehicle washing brush produced from brush bristles obtained by the method according to any one of claims 1 to 5, **characterised in that** it is formed of standard honeycombed (2) sheets (1) in which the bristles (3) are fixed in a conventional manner.

9. Brush according to claim 8, **characterised in that** each honeycombed sheet (1) includes both foam bristles (3) obtained by the method according to any one of claims 1 to 5 and conventional extruded plastic bristles.

10. Brush according to claim 8 or claim 9, **characterised in that** the brush comprises bristles (3) of two different lengths.

11. Brush according to claims 9 and 10, **characterised in that** the long bristles are formed by foam bristles (3) obtained by the method according to any one of claims 1 to 5, while the short bristles are formed by conventional extruded plastic bristles.

## Patentansprüche

1. Verfahren zum Herstellen von Bürstenfilamenten aus Kunststoffschaum zum Waschen von Fahrzeugen,
**dadurch gekennzeichnet, dass** es darin besteht, in einer geschlossenen Form unter Druck Polyolefinschaum mit geschlossenen Zellen in Form eines Blocks herzustellen, der anschließend zu Platten geschnitten wird, dann zu Riemen, um Bürstenfilamente herzustellen.

2. Verfahren nach Anspruch 1, **dadurch gekennzeichnet, dass** der Formdruck höher als 5000 kPa ist.

3. Verfahren nach Anspruch 1 oder 2, **dadurch gekennzeichnet, dass** der Polyolefinschaum chemisch vernetzt wird.

4. Verfahren nach einem der Ansprüche 1 bis 3, **dadurch gekennzeichnet, dass** der Polyolefinschaum eine zwischen 150 und 200 kg/m³ enthaltene Dichte hat.

5. Verfahren nach Anspruch 4, **dadurch gekennzeichnet, dass** der Polyolefinschaum eine Dichte von 170 kg/m³ hat.

6. Bürstenfilamente, hergestellt durch das Verfahren nach einem der Ansprüche 1 bis 5, **dadurch gekennzeichnet, dass** sie einen Querschnitt haben, der von 0,2 bis 1,5 cm geht.

7. Bürstenfilamente nach Anspruch 6, **dadurch gekennzeichnet, dass** sie einen rechteckigen Querschnitt von 0,3 auf 0,6 cm haben.

8. Autowaschbürste, durch das Verfahren nach einem der Ansprüche 1 bis 5 hergestellte Büstenfilamente umfassend, **dadurch gekennzeichnet, dass** sie gebildet wird durch Standardplatten (1) mit Buchsen (2), in denen die Filamente (3) auf herkömmliche Art befestigt sind.

9. Bürste nach Anspruch 8, **dadurch gekennzeichnet, dass** jede Buchsenplatte (1) zugleich Schaumfilamente (3), hergestellt durch das Verfahren nach einem der Ansprüche 1 bis 5, und klassische Filamente aus extrudiertem Kunststoff umfasst.

10. Bürste nach Anspruch 8 oder 9, **dadurch gekennzeichnet, dass** die Bürste Filamente (3) mit zwei verschiedenen Längen umfasst.

11. Bürste nach den Ansprüchen 9 und 10, **dadurch gekennzeichnet, dass** die langen Filamente durch Schaumfilamente (3), hergestellt nach einem der Ansprüche 1 bis 5 gebildet werden, während die kurzen Filamente durch klassische, aus Kunststoff extrudierte Filamente gebildet werden.
